# EUROPÄISCHE PATENTANMELDUNG

(11) **EP 2 924 520 A1**
(43) Veröffentlichungstag der Anmeldung: **30.09.2015**
(21) Anmeldenummer: 14161410.7
(22) Anmeldetag: 25.03.2014
(51) Int. Cl.: G05B 17/02, G05B 19/418

(54) **Verfahren zur Simulation einer automatisierten industriellen Anlage**

(71) Anmelder: Siemens Aktiengesellschaft, 80333 München (DE)
(72) Erfinder: Drumm, Oliver, 76344 Eggenstein-Leopoldshafen (DE); Glaser, Martin, 76698 Ubstadt-Weiher (DE); Lutz, Benjamin, 76327 Pfinztal (DE); Wolf, Gerrit, 76187 Karlsruhe (DE)

(57) **Zusammenfassung**

Die Erfindung betrifft ein Verfahren zur Simulation einer automatisierten industriellen Anlage mit einer speicherprogrammierbaren Steuerung (2), in welcher ein Automatisierungsprogramm (9) abläuft, und mit einem Simulationswerkzeug (10) zur Simulation des Anlagenverhaltens. Das Simulationswerkzeug (10) wird mittels einer ersten Schnittstelle (3) zur Datenübertragung mit der speicherprogrammierbaren Steuerung (2) verbunden, welche unabhängig von einer Prozessschnittstelle (4) der speicherprogrammierbaren Steuerung ist. Dadurch kann der Aufwand, der bei bisherigen Simulationswerkzeugen für die Ankopplung an die Prozessschnittstelle (4) erforderlich war, nun vorteilhaft entfallen.

## Beschreibung

Die Erfindung betrifft ein Verfahren zur Simulation einer automatisierten industriellen Anlage mit einer speicherprogrammierbaren Steuerung, in welcher ein Automatisierungsprogramm abläuft, und mit einem Simulationswerkzeug zur Simulation des Anlagenverhaltens anhand eines Anlagenmodells gemäß dem Oberbegriff des Anspruchs 1. Weiterhin betrifft die Erfindung eine speicherprogrammierbare Steuerung und ein Simulationswerkzeug zur Durchführung des Verfahrens gemäß Anspruch 5 bzw. Anspruch 6.

Zur Automatisierung industrieller Anlagen, d. h. zur automatischen Steuerung und/oder Überwachung auf industriellen Anlagen ablaufender Prozesse, werden Automatisierungsgeräte eingesetzt. Spezielle Automatisierungsgeräte sind als sogenannte speicherprogrammierbare Steuerungen bekannt. Andere spezielle Automatisierungsgeräte werden beispielsweise als Leitsysteme bezeichnet, an welche mehrere speicherprogrammierbare Steuerungen angeschlossen sein können und die eine übergeordnete Steuerung für diese bilden. Speicherprogrammierbare Steuerungen unterscheiden sich von Standardcomputern, wie sie für Büroanwendungen eingesetzt werden, durch erweiterte Anschlussmöglichkeiten, eine reduzierte spezifische Funktionalität sowie ihre Eignung zum Einsatz in Industrieumgebungen. Die erweiterten Anschlussmöglichkeiten sind zur Realisierung einer Prozessschnittstelle erforderlich, durch welche Prozessperipherie mit der speicherprogrammierbaren Steuerung (SPS) verbunden werden kann, um Prozesssignale, beispielsweise Werte von Prozessvariablen wie Druck, Temperatur, Durchflussmenge, Füllstand, Dichte oder Gaskonzentration eines Mediums, welche durch Messumformer als Feldgeräte erfasst werden, aus der industriellen Anlage aufzunehmen und um weitere Prozesssignale entsprechend einer durch ein Automatisierungsprogramm vorgegebenen Strategie zur Steuerung des Prozesses auszugeben. Zur Steuerung kann beispielsweise mittels eines Regelventils als Stellglied eine Ventilstellung eingestellt werden, welche einem von einer speicherprogrammierbaren Steuerung als Prozesssignal ausgegebenen Sollwert entspricht.

Bei der Realisierung von Automatisierungsprojekten in der Prozessindustrie herrscht ein großer Kostendruck. Die Herausforderung besteht darin, die automatisierungstechnische Ausrüstung der industriellen Anlage in kürzest möglicher Zeit mit hoher Qualität zu planen, zu installieren und in Betrieb zu setzen. Dabei ist eine zumindest teilweise Simulation der automatisierten industriellen Anlage von Vorteil. Ein geeignetes Simulationswerkzeug "SIMIT: Simulation und virtuelle Inbetriebnahme ist aus dem Katalog "Siemens ST PCS 7 T", April 2013, S. 4/2 bis 4/6 bekannt. Beispielsweise mit diesem Werkzeug durchgeführte Simulationen können für virtuelle Inbetriebnahmen, sogenannte Operator-Training-Systeme und andere Anwendungen eingesetzt werden. Das Simulationswerkzeug SIMIT ermöglicht den Test und die Inbetriebnahme einer speicherprogrammierbaren Steuerung an einer zumindest in Teilen virtuellen Anlage. Hierzu lässt sich das Verhalten der Prozessperipherie sowie der industriellen Anlage oder Teilanlage in SIMIT abbilden und in Echtzeit simulieren. Durch die Berechnung der Modelle in Echtzeit ist eine Ankopplung des Simulationswerkzeugs an eine reale speicherprogrammierbare Steuerung möglich, sodass ein sogenanntes HIL (Hardware In the Loop)-System aufgebaut werden kann. Vor allem beim Test eines in einer speicherprogrammierbaren Steuerung ablaufenden Automatisierungsprogramms, auch als Steuerungscode bezeichnet, ist wichtig, dass der erstellte Code nicht für die Simulation verändert werden muss, um ihn testen zu können. Zur Anschaltung des Simulationswerkzeugs SIMIT an die reale speicherprogrammierbare Steuerung wird die vorhandene Prozessschnittstelle der Steuerung genutzt. Übliche Prozessschnittstellen umfassen Schnittstellen für Feldbusse, beispielsweise PROFIBUS DP oder PROFINET IO, sowie I/O-Anschlüsse. Zur Anschaltung des Simulationswerkzeugs beispielsweise an eine Feldbusschnittstelle wird bisher ein Protokoll-Gateway eingesetzt, um das Protokoll der Schnittstelle des Simulationswerkzeugs auf das Protokoll des jeweiligen Feldbusses umzusetzen. Diese Art der Anschaltung ist aufwendig, da sie zum einen physikalisch in die Verbindung zwischen Simulationswerkzeug und Steuerung eingebaut werden muss, zum anderen eine Vielfalt von Feldbussen mit verschiedenen Protokollen existiert. Durch jede Anschaltung muss die jeweilige Kommunikationsfunktion exakt abgebildet werden. Zudem muss die Anschaltung sowohl funktional als auch zeitlich exakt arbeiten, um den Ablauf des Automatisierungsprogramms in der speicherprogrammierbaren Steuerung nicht zu beeinträchtigen. Eine Simulation des Anlagenverhaltens in Echtzeit bedeutet nämlich, dass eine simulierte Zeiteinheit, auch als Zeitscheibe bezeichnet, in ihrer Dauer einem Zyklus bei zyklischer Bearbeitung eines Automatisierungsprogramms entspricht. Die Realisierung eventuell mehrerer, zur Verbindung des Simulationswerkzeugs mit einer speicherprogrammierbaren Steuerung über die Prozessschnittstelle erforderlicher Anschaltungen ist daher mit hohem Aufwand verbunden.

Der Erfindung liegt die Aufgabe zugrunde, ein Verfahren zur Simulation einer automatisierten industriellen Anlage zu finden, bei welchem ein Simulationswerkzeug zur Simulation des Anlagenverhaltens mit geringerem Aufwand an eine reale speicherprogrammierbare Steuerung, in welcher ein Automatisierungsprogramm abläuft, anschaltbar ist. Weitere Aufgaben bestehen darin, eine speicherprogrammierbare Steuerung bzw. ein Simulationswerkzeug zu schaffen, welche zur Durchführung des Simulationsverfahrens geeignet sind.

Zur Lösung dieser Aufgabe weist das neue Verfahren der eingangs genannten Art die in Anspruch 1 angegebenen Merkmale auf. In den abhängigen Ansprüchen sind Weiterbildungen der Erfindung, in den Ansprüchen 5 und 6 eine speicherprogrammierbare Steuerung bzw. ein Simulationswerkzeug beschrieben.

Die Erfindung hat den Vorteil, dass zur Durchführung einer Simulation einer automatisierten industriellen Anlage mit einem Simulationswerkzeug zur Simulation des Anlagenverhaltens und einer realen speicherprogrammierbaren Steuerung, in welcher ein Automatisierungsprogramm abläuft, keine spezielle, an die Prozessschnittstelle der jeweils verwendeten Automatisierungsgeräte angepasste Anschaltung mehr erforderlich ist. Dadurch entfällt ein erheblicher, applikationsspezifischer Aufwand, der bisher bei der Erstellung einer Simulationsanordnung angefallen war. Insbesondere entfällt eine Vielzahl von verschiedenen Anschaltungen und Protokollumsetzern, die bisher für die verschiedenen Feldbustypen, z. B. PROFIBUS, PROFINET IO, Foundation Fieldbus (FF), DeviceNet, CANopen, Modbus, HART Communication oder EtherNet/IP erforderlich waren. Stattdessen können die Prozesssignale zwischen auf dem Simulationswerkzeug simulierter Anlage und realer speicherprogrammierbarer Steuerung nun über eine einheitliche erste Schnittstelle übertragen werden, welche unabhängig von der Prozessschnittstelle ist. Als Prozesssignale werden in der vorliegenden Anmeldung zusammenfassend alle zwischen Anlage und Steuerung übertragenen Werte von Prozessvariablen bezeichnet, unabhängig davon, ob diese als Digitalwerte über eine Stichleitung oder über einen Feldbus oder als Analogsignale, beispielsweise mittels einer 4 bis 20 mA-Schnittstelle, über die Prozessschnittstelle übertragen werden.

Bei der Simulation werden, wie bereits oben beschrieben, Prozesssignale anstelle über die Prozessschnittstelle der speicherprogrammierbaren Steuerung nun über eine erste Schnittstelle zur Datenübertragung geleitet, welche unabhängig von der Prozessschnittstelle ist. Dazu kann in der speicherprogrammierbaren Steuerung eine Umschaltung eines Signalflusses durchgeführt werden derart, dass die Prozesssignale, die beim realen Betrieb zur Übertragung zwischen realer Anlage und Automatisierungsprogramm, welches in der speicherprogrammierbaren Steuerung abläuft, über die Prozessschnittstelle der speicherprogrammierbaren Steuerung vorgesehen sind, bei der Simulation zwischen Simulationswerkzeug und Automatisierungsprogramm über die erste Schnittstelle zur Datenübertragung übertragen werden. Selbstverständlich ist es möglich, mittels dieser ersten Schnittstelle weitere Daten, beispielsweise Daten zur Simulationssynchronisation, ergänzend zu den eigentlichen Prozesssignalen zu übertragen. Eine besonders einfache Realisierung der beschriebenen Signalflussumschaltung ist möglich, wenn in der speicherprogrammierbaren Steuerung ein Prozessabbild geführt wird, in welches den Prozesssignalen entsprechende Daten eingetragen werden. In diesem Fall kann die auf der ersten Schnittstelle zur Datenübertragung stattfindende Kommunikation als eine Synchronisation des in der speicherprogrammierbaren Steuerung gehaltenen Prozessabbilds mit einem entsprechenden Prozessabbild angesehen werden, welches in dem Simulationswerkzeug geführt wird.

Wenn in einer automatisierten industriellen Anlage eine speicherprogrammierbare Steuerung mit einem Leitsystem über eine Schnittstelle zur Datenübertragung verbunden ist, wird der zyklisch in der speicherprogrammierbaren Steuerung gelesene und geschriebene Speicherbereich des Prozessabbilds zudem im Leitsystem tabellarisch erfasst und lässt sich somit anhand der Semantik der Einträge ansprechen. In vorteilhafter Weise ist darüber hinaus keine zusätzliche, gesonderte Schnittstelle zur Realisierung der oben genannten ersten Schnittstelle für die Ankopplung des Simulationswerkzeugs an die speicherprogrammierbare Steuerung erforderlich, wenn als erste Schnittstelle zur Datenübertragung, die bei der Simulation für die Übertragung der Prozesssignale zwischen Simulationswerkzeug und speicherprogrammierbarer Steuerung genutzt wird, dieselbe Schnittstelle verwendet wird, mit welcher die speicherprogrammierbare Steuerung zur Kommunikation mit dem Leitsystem verbunden ist. Die erste Schnittstelle ist dabei zum Anschluss an ein Netzwerk mit mehreren Teilnehmern ausgebildet.

In einer besonders vorteilhaften Weiterbildung der Erfindung kann das Anlagenmodell dahingehend verbessert werden, dass Modelle integriert sind, durch welche Laufzeiten von Prozesssignalen über die Prozessschnittstelle abgebildet werden. Dadurch können beispielsweise Verzögerungen Berücksichtigung finden, die bei ihrer Übertragung über reale Feldbusse entstehen würden und spezifisch für den jeweiligen Feldbustyp sind. Ebenso kann die interne Verzögerung innerhalb der speicherprogrammierbaren Steuerung in das Modell einfließen. Die Simulation einer automatisierten industriellen Anlage wird durch Berücksichtigung der Laufzeiten der Prozesssignale insbesondere dann verbessert, wenn diese Laufzeiten sich bei einer Übertragung der Prozesssignale über die Prozessschnittstelle im realen Betrieb deutlich von den Laufzeiten bei Übertragung über die erste Schnittstelle zum Simulationswerkzeug hin unterscheiden.

Die Erfindung ist dabei bevorzugt in Software oder in Soft- und Hardware implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine speicherprogrammierbare Steuerung oder ein Simulationswerkzeug, in deren Speicher als Mittel zur Durchführung des Verfahrens und seiner Ausgestaltungen ein solches Computerprogramm geladen oder ladbar ist.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Blockschaltbild einer automatisierten industriellen Anlage,
- Figur 2: ein Simulationswerkzeug und
- Figur 3: eine speicherprogrammierbare Steuerung.

In den Figuren sind gleiche Teile mit gleichen Bezugszeichen versehen.

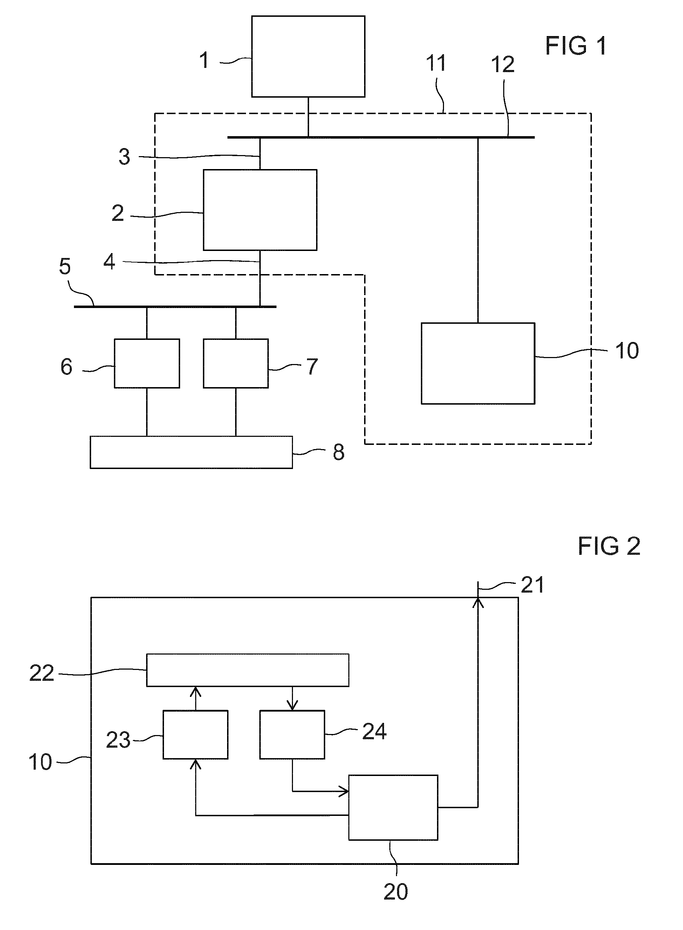

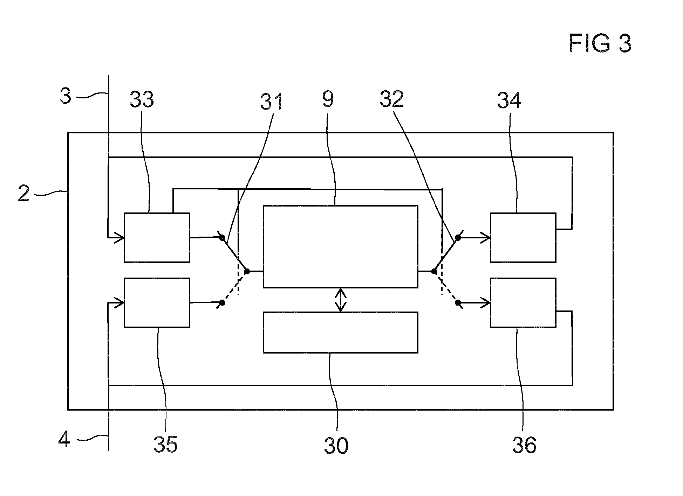

Zur Verdeutlichung der Erfindung ist in Figur 1 eine automatisierte industrielle Anlage mit einfachem Aufbau dargestellt. Ein Leitsystem 1 und eine speicherprogrammierbare Steuerung 2 sind durch eine erste Schnittstelle 3 zur Datenübertragung miteinander verbunden. Bei der Schnittstelle 3 kann es sich beispielsweise um eine Schnittstelle handeln, die zum Anschluss an ein PROFINET oder Industrial Ethernet 12 geeignet ist. Die speicherprogrammierbare Steuerung 2 hat zur Anschaltung an die industrielle Anlage eine Prozessschnittstelle 4. Im gezeigten Ausführungsbeispiel ist der Übersichtlichkeit wegen lediglich ein Feldbus 5, beispielsweise PROFIBUS, an die Prozessschnittstelle 4 angeschlossen. Über den Feldbus 5 kommuniziert die speicherprogrammierbare Steuerung 2 beispielsweise mit einer dezentralen Peripherie 6 und einem Messumformer 7 als prozessnahe Komponenten, um einen auf der industriellen Anlage ablaufenden Prozess 8 einem Automatisierungsprogramm 9 (Figur 3) entsprechend zu steuern.

Es ist selbstverständlich, dass die Prozessschnittstelle 4 in praktischen Anwendungsfällen deutlich umfangreicher ausgestaltet sein kann und beispielsweise zusätzliche Feldbusse und/oder weitere Ein-/ Ausgabekanäle vorgesehen sein können. Bei bisherigen Hardware-In-the-Loop-Testlösungen musste ein Simulationswerkzeug mit vergleichsweise hohem Adaptionsaufwand, wie bereits einleitend beschrieben, an die Prozessschnittstelle 4 angekoppelt werden. Dieser Aufwand wird nun deutlich reduziert, indem ein Simulationswerkzeug 10 mittels der ersten Schnittstelle 3 zur Datenübertragung mit der speicherprogrammierbaren Steuerung 2 verbunden ist, welche unabhängig von der Prozessschnittstelle 4 ist. Das hat den Vorteil, dass keine zusätzliche Hardware zur Adaption erforderlich ist, wie dies bei der bisherigen Anschaltung an die Prozessschnittstelle 4 der Fall war. Vorteilhaft handelt es sich bei der ersten Schnittstelle 3 um dieselbe Schnittstelle, mittels welcher auch das Leitsystem 1 mit der speicherprogrammierbaren Steuerung 2 verbunden ist. Dadurch ist keine gesonderte Schnittstelle für Simulationszwecke an der speicherprogrammierbaren Steuerung 2 erforderlich. Zur Durchführung beispielsweise einer Simulation zur Inbetriebnahme der automatisierten industriellen Anlage werden lediglich die in einem Block 11 befindlichen Komponenten benötigt, der in Figur 1 mit durchbrochenen Linien gezeichnet ist. Die sind im Wesentlichen die speicherprogrammierbare Steuerung 2 und das Simulationswerkzeug 10. Bei der Simulation werden somit die Prozesssignale, die beim realen Betrieb zur Übertragung über die Prozessschnittstelle 4 zwischen dem in der speicherprogrammierbaren Steuerung 2 ablaufenden Automatisierungsprogramm und prozessnahen Komponenten 6, 7 in der Anlage vorgesehen sind, über die erste Schnittstelle 3 zwischen Automatisierungsprogramm 9 (Figur 3) und Simulationswerkzeug 10 übertragen.

In Figur 2 ist das Simulationswerkzeug 10 noch einmal mit größerem Detaillierungsgrad dargestellt. Das Simulationswerkzeug 10 ist beispielsweise auf der Basis des bekannten Simulationswerkzeugs SIMIT realisiert und unter anderem gegenüber diesem um einige Komponenten erweitert. Zur Ankopplung an die Schnittstelle 3 (Figur 1) ist ein Kommunikationstreiber 20 ergänzt, der eine Schnittstelle 21 für eine Kommunikation auf der Basis von PROFINET oder Industrial Ethernet, insbesondere auf der Basis einer SIMATIC S 7-Kommunikation, bereitstellt. Der Kommunikationstreiber 20 kann beispielsweise mit den Protokollen Shared Memory oder OPC (OLE for Process Control) arbeiten, um Prozesssignale der angeschlossenen speicherprogrammierbaren Steuerung 2 (Figur 1) lesen und schreiben zu können. Um beispielsweise das Zeitverhalten realer Feldbusse, deren Anschaltungen Bestandteile der Prozessschnittstelle 4 (Figur 1) sein können, imitieren zu können, ist ein im Simulationswerkzeug 10 hinterlegtes Modell 22 für Verhalten von Anlage und prozessnahen Automatisierungsgeräten um Laufzeitmodelle 23 und 24 für Lesen bzw. Schreiben von Prozesssignalen erweitert. Diese Laufzeitmodelle 23 und 24 können neben kommunikationsspezifischen Laufzeitmodellen, d. h. Modellen, die spezifisch beispielsweise für das jeweils verwendete Feldbusprotokoll sind, auch Transformationen enthalten, die beispielsweise einen zur Simulation verwendeten Datenwert einer Prozessvariablen, z. B. 11,5 °C, vor der Übertragung in ein der jeweiligen Prozessschnittstelle 4 entsprechendes Hardwaresignal, z. B. 0XFFABC12E, umwandeln.

In Figur 3 ist eine mögliche Umschaltung von Signalpfaden in der speicherprogrammierbaren Steuerung 2 dargestellt. Das Automatisierungsprogramm 9, welches ein Prozessabbild 30 führt, ist zur Steuerung des auf der Anlage laufenden Prozesses 8 (Figur 1) vorgesehen. Bei der Simulation befinden sich Signalflussschalter 31 und 32 in einer ersten Stellung, in welcher sie mittels eines Eingangskanaltreibers 33 bzw. eines Ausgangskanaltreibers 34 Verbindungen zur Schnittstelle 3 herstellen. Im beschriebenen Ausführungsbeispiel können die Kanaltreiber 33 und 34 auch als PROFINET- oder Industrial Ethernet-Kanaltreiber bezeichnet werden. Ähnlich wie beim Bedienen und Beobachten durch das Leitsystem 1 (Figur 1) können die simulierten Prozesssignale, welche den im Prozessabbild 30 hinterlegten Datenwerten von Prozessvariablen entsprechen, veranlasst durch über die Schnittstelle 3 gesendete Telegramme des angeschlossenen Simulationswerkzeugs 10 (Figur 1), im Prozessabbild 30 geschrieben oder gelesen werden. Die Umschaltung der Schalter 31 und 32 kann beispielsweise durch den Eingangskanaltreiber 33 durch ein besonderes Telegramm von dem Simulationswerkzeug 10 (Figur 1) gesteuert werden. Nach erfolgreichem Simulationstest werden die Schalter 31 und 32 in die mit durchbrochenen Linien eingezeichnete Stellung umgelegt. Im realen Betrieb erhält nun das Automatisierungsprogramm 9 seine Eingangssignale über einen Eingangskanaltreiber 35 und gibt seine Ausgangssignale über einen Ausgangskanaltreiber 36 an die Prozessschnittstelle 4 aus.

Im Folgenden werden die durch die Erfindung erzielten Vorteile, die anhand des in den Figuren 1 bis 3 gezeigten Ausführungsbeispiels deutlich werden, kurz zusammengefasst:
- Einsparung bisher für eine Ankopplung an eine Prozessschnittstelle erforderlicher Hardwarekomponenten,
- Reduktion von Fehlerquellen bei einer Konfiguration der Simulationsanordnung,
- zusätzliche Simulation der Buskommunikation, beispielsweise bei Verwendung eines Feldbusses zu den prozessnahen Komponenten, in einem Simulationswerkzeug bei gleichem Modellierungsansatz wie bei den prozessnahen Komponenten und einem beispielsweise verfahrenstechnischen Prozess,
- mögliche Nutzung von Teilmodellen aus Modellbibliotheken zur Simulation aufgrund der Einführung verschiedener Hierarchieebenen, z. B. Feldbusebene, Feldgeräteebene, Prozessebene,
- Ermöglichen eines frühen Tests der Leitsystemsoftware durch gleichen Zugriff des Simulationswerkzeugs auf die realen speicherprogrammierbaren Steuerungen,
- Simulation der Feldbuskommunikation ermöglicht eine Analyse der notwendigen Übertragungsraten und erlaubt eine automatische Optimierung hinsichtlich der in der jeweiligen industriellen Anlage verwendeten Kommunikationstechnologien,
- einfacherer Tausch einer Kommunikationstechnologie, wenn bei der Simulation eine Überforderung eines Netzwerks erkannt wird,
- das Automatisierungsprogramm kann bei der Simulation unverändert bleiben, sodass Zertifizierungsauflagen weiter eingehalten werden,
- eine Simulation von automatisierten industriellen Anlagen wird ermöglicht, die aus einer Kombination und Hierarchie von unterschiedlichen Kommunikationssystemen bestehen,
- neben einer "Gutsimulation" der Kommunikation lassen sich auch Störungen der Kommunikation simulieren, z. B. Störungen wegen ungenügender elektromagnetischer Verträglichkeit oder wegen Kabelbruch,
- die Robustheit einer automatisierten industriellen Anlage gegenüber Störungen oder Ausfall sowie ein evtl. vorhandenes Redundanzkonzept sind testbar,
- eine Kausalitätskette in einer Fehlerfortpflanzung ist erkennbar, da eine Störungssimulation mit demselben Simulationswerkzeug durchführbar ist, z. B. wenn ein defektes Feldgerät oder ein defekter Roboter bewirkt, dass auch die Kommunikation gestört wird,
- in der Simulation mit Laufzeitmodellen für die Kommunikation können Distanzen berücksichtigt werden, indem beispielsweise ein Parameter "Länge" im jeweiligen Simulationsmodell eingeführt wird, welcher entscheidend für die mögliche Übertragungsgeschwindigkeit und die jeweilige Kommunikationstechnologie sein kann,
- für die Kommunikation in einer Modellbibliothek hinterlegte Modelle können mit den jeweiligen Eigenschaften des Kommunikationssystems, z. B. seiner Länge, aus einem Planungssystem, häufig als Engineeringwerkzeug bezeichnet, parametriert bzw. in dieses Planungssystem rückgespielt werden und
- Steigerung der Simulationsqualität bei gleichzeitiger Zeiteinsparung und Kostenreduktion.

## Patentansprüche

1. Verfahren zur Simulation einer automatisierten industriellen Anlage mit einer speicherprogrammierbaren Steuerung (2), in welcher ein Automatisierungsprogramm (9) abläuft, das zur Steuerung eines auf der Anlage ablaufenden Prozesses (8) vorgesehen ist, und mit einem Simulationswerkzeug (10) zur Simulation des Anlagenverhaltens anhand eines Anlagenmodells (22...24), **dadurch gekennzeichnet, dass** das Simulationswerkzeug (10) mittels einer ersten Schnittstelle (3) zur Datenübertragung mit der speicherprogrammierbaren Steuerung (2) verbunden wird, welche unabhängig von einer Prozessschnittstelle (4) der speicherprogrammierbaren Steuerung (2) ist, und dass bei der Simulation die Prozesssignale, die beim realen Betrieb zur Übertragung über die Prozessschnittstelle (4) zwischen Automatisierungsprogramm (9) und Anlage vorgesehen sind, über die erste Schnittstelle (3) zwischen Automatisierungsprogramm (9) und Simulationswerkzeug (10) übertragen werden.

2. Verfahren nach Anspruch 1, **dadurch gekennzeichnet, dass** in der speicherprogrammierbaren Steuerung (2) ein Prozessabbild (30) geführt wird, in welches den Prozesssignalen entsprechende Daten eingetragen werden.

3. Verfahren nach Anspruch 1 oder 2, **dadurch gekennzeichnet, dass** als erste Schnittstelle (3) die Schnittstelle (3) der speicherprogrammierbaren Steuerung (2) verwendet wird, die zur Kommunikation mit einem Leitsystem (1) vorgesehen ist.

4. Verfahren nach einem der vorhergehenden Ansprüche, **dadurch gekennzeichnet, dass** das Anlagenmodell (22...24) um Modelle (23, 24) erweitert ist, durch welche Laufzeiten der Prozesssignale über die Prozessschnittstelle (4) und/oder einen Feldbus (5) abgebildet werden.

5. Speicherprogrammierbare Steuerung zur Durchführung eines Simulationsverfahrens nach einem der Ansprüche 1 bis 4, **dadurch gekennzeichnet, dass** das Simulationswerkzeug (10) mittels einer ersten Schnittstelle (3) zur Datenübertragung mit der speicherprogrammierbaren Steuerung (2) verbindbar ist, welche unabhängig von einer Prozessschnittstelle (4) der speicherprogrammierbaren Steuerung (2) ist, und dass die speicherprogrammierbare Steuerung (2) zumindest einen Umschalter (31, 32) für einen Signalfluss aufweist derart, dass bei der Simulation die Prozesssignale, die beim realen Betrieb zur Übertragung über die Prozessschnittstelle (4) zwischen Automatisierungsprogramm (9) und Anlage vorgesehen sind, über die erste Schnittstelle (3) zwischen Automatisierungsprogramm (9) und Simulationswerkzeug (10) übertragbar sind.

6. Simulationswerkzeug zur Durchführung eines Simulationsverfahrens nach einem der Ansprüche 1 bis 4, **dadurch gekennzeichnet, dass** das Simulationswerkzeug (10) mittels der ersten Schnittstelle (3) zur Datenübertragung mit der speicherprogrammierbaren Steuerung (2) verbindbar ist, welche unabhängig von der Prozessschnittstelle (4) der speicherprogrammierbaren Steuerung ist, und dass bei der Simulation die Prozesssignale, die beim realen Betrieb zur Übertragung über die Prozessschnittstelle (4) zwischen Automatisierungsprogramm (9) und Anlage vorgesehen sind, über die erste Schnittstelle (3) zwischen Automatisierungsprogramm (9) und Simulationswerkzeug (10) übertragbar sind.

7. Computerprogramm oder Computerprogrammprodukt mit auf einem computerlesbaren Datenträger gespeicherten ProgrammcodeMitteln, die zur Durchführung eines Simulationsverfahrens nach einem der Ansprüche 1 bis 4 vorgesehen und bestimmt sind, wenn das Programm auf einer speicherprogrammierbaren Steuerung gemäß Anspruch 5 oder auf einem Simulationswerkzeug gemäß Anspruch 6 ausgeführt wird.
